Europäisches Patentamt

European Patent Office

Office européen des brevets

(1) Publication number: **0 073 278**

**B1**

## EUROPEAN PATENT SPECIFICATION

(45) Date of publication of patent specification: **16.01.85**

(51) Int. Cl.⁴: **B 60 K 17/22, F 16 D 3/84**

(21) Application number: **81303906.2**

(22) Date of filing: **26.08.81**

(54) Cardan shaft vehicle transmission.

(43) Date of publication of application:
09.03.83 Bulletin 83/10

(45) Publication of the grant of the patent:
16.01.85 Bulletin 85/03

(84) Designated Contracting States:
AT BE DE FR GB IT NL SE

(56) References cited:
DE-A-1 910 284
US-A-1 624 262
US-A-1 887 755
US-A-3 075 370

(73) Proprietor: **DEERE & COMPANY**
**1 John Deere Road**
**Moline Illinois 61265 (US)**

(72) Inventor: **Hook, Wolfgang**
**Mozart Strasse 5**
**D-6806 Viernheim (DE)**

(74) Representative: **Pears, David Ashley et al**
**REDDIE & GROSE 16 Theobalds Road**
**London WC1X 8PL (GB)**

Courier Press, Leamington Spa, England.

## Description

The present invention relates to a Cardan shaft vehicle transmission wherein a Cardan shaft transmitting drive to one or more wheels has a universal joint outside a gear casing at one end of the shaft, a grease nipple on the universal joint and a protective sleeve mounted on the gear casing and surrounding the universal joint.

The invention may in particular be applied to the front wheel transmission of a tractor having a generally fore-and-aft. Cardan shafts extending to a bevel gear casing at its front end. The bevel gears drive a front wheel axle. Such transmissions are in general use on the products of several manufacturers and it is common practice to provide a protective shield to prevent damage to and contamination of the otherwise exposed Cardan shaft. The sleeve is a section of steel tube having a plurality of legs welded to it. The legs straddle the gear casing cover part and have apertured lugs at their distal ends which are clamped under the heads of the bolts which fix the gear casing cover part in place.

The sleeve has an access hole through it to enable a service engineer to apply a grease gun to the grease nipple of the universal joint. Although this hole is correctly positioned in the axial direction, the grease nipple can only be reached when the Cardan shaft has the correct rotational position such as to align the grease nipple radially with the hole. Since the Cardan shaft is permanently coupled to a front wheel, the only way ordinarily to achieve alignment is for a second engineer to inch the tractor along while the first engineer peers through the hole until the first engineer sees the nipple and tells the second engineer to stop. Although this procedure can be and is employed it is highly inconvenient and means that the simple operation of greasing the universal joint necessitates two engineers.

The object of the present invention is to overcome this widespread problem and the invention is defined in the characterising part of claim 1 below while advantageous developments of the invention are defined in the dependent claims.

The invention will be described in more detail, by way of example, with reference to the accompanying drawings, in which:

Fig. 1 is a plan view of part of a tractor showing the transmission for the left-hand front wheel, and

Fig. 2 is a fragmentary end view of a support ring.

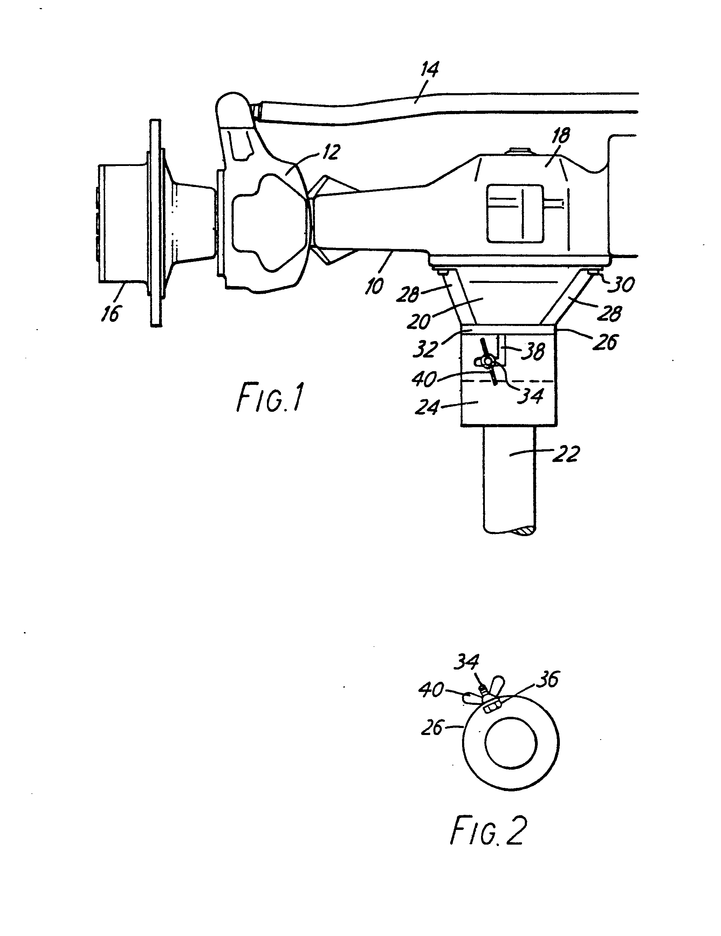

Fig. 1 shows a front axle casing 10 with a steering knuckle 12 surveilled by a track rod 14 and carrying the wheel hub 16. The axle casing 10 is integral with the main part of a bevel gear casing 18 having a rear cover part 20. A generally fore-and-aft Cardan shaft 22 transmitting drive from a motor (not shown) is coupled into the gear casing by way of a universal joint which is not visible as it is inside a protective sleeve 24. The universal joint has a conventional grease nipple also inside the sleeve 24.

The sleeve 24 is removably mounted on a support ring 26 which encircles the rear end of the gear casing cover part 20. The ring 26 has three or four circumferentially spaced legs 28 (two being visible) which diverge forwardly so as to straddle the cover part 20. The forward, distal ends of the legs are bent out to form lugs through which pass the same bolts 30 as fix the cover part in place. The ring 26 is thus permanently attached to the gear casing, except when major disassembly is undertaken.

The protective sleeve 24 telescopes on to the ring 26 into abutment with a flange 32 round the front of the ring. The sleeve has an apertured end wall which fits fairly closely round the Cardan shaft to prevent the ingress of dirt, although with enough clearance to accommodate the movements of the Cardan shaft. The ring 26 has a captive bolt 34 projecting radially therethrough. Preferably the head 36 of the bolt (Fig. 2) is welded to the inside of the ring. The sleeve 24 has an L-shaped slot 38 opening out to the front edge of the sleeve and the bolt is received in the slot after the manner of a bayonet connection. In order to fit the sleeve it is slid forward on to the ring 26 and then rotated into the illustrated position. It may be released by the reverse movements and then slid back up to the Cardan shaft 22 to expose the grease nipple for easy servicing, irrespective of the radial direction along which the nipple happens to lie.

In order to complete secure attachment of the sleeve to the ring a nut 40 on the bolt 34 is tightened on to the sleeve. As illustrated the nut may be a wing nut so that no spanner is needed to release and tighten it. A lock washer may be employed under the nut. Although a single bolt 34 and slot 38 are shown, there may be a plurality of these spaced round the periphery to ensure reliable fixing. Other means of fixing the sleeve on the ring may be employed provided they are secure yet easy to release. Straight axial slots 38 instead of L-slots can be used, preferably with the inner end of the slots recessed to receive the nuts so that the sleeve is positively (and not merely frictionally) restrained. The ring and sleeve may have complementary screw threads.

## Claims

1. A Cardan shaft vehicle transmission wherein a Cardan shaft (22) transmitting drive to one or more wheels has a universal joint outside a gear casing (18, 20) at one end of the shaft, a grease nipple on the universal joint and a protective sleeve (24) mounted on the gear casing and surrounding the universal joint, characterised in that the sleeve (24) is releas-

## 0 073 278

ably mounted on a support ring (26) which is fixed to the gear casing (18, 20).

2. A vehicle transmission according to claim 1, characterised in that the support ring (26) is fixed to the gear casing (18, 20) by means of a plurality of legs (28) fixed to the ring and fixed at their distal ends to the casing.

3. A vehicle transmission according to claim 1 or 2, characterised in that the sleeve (24) telescopes on to the ring (26) into abutment with a flange (32) on the ring (26).

4. A vehicle transmission according to claim 1, 2 or 3, characterised in that the sleeve (24) has at least one L-slot (38) making a bayonet connection with a member (34) protruding from the ring (26).

5. A vehicle transmission according to claim 4, characterised in that the said member (34) is a bolt carrying a nut (40) for tightening on the sleeve (24).

### Revendications

1. Transmission de véhicule à arbre à cardan, dans laquelle un arbre à cardan (22) transmettant l'entraînement à une ou plusieurs roues comporte un joint de cardan à l'extérieur d'un carter de mécanisme (18, 20) à une extrémité de l'arbre, un graisseur prévu sur le joint de cardan et un manchon protecteur (24) monté sur le carter de mécanisme et entourant le joint de cardan, caractérisé en ce que le manchon (24) est monté de façon amovible sur une bague de support (26) qui est fixée sur le carter de mécanisme (18, 20).

2. Transmission de véhicule suivant la revendication 1, caractérisée en ce que la bague de support (26) est fixée sur le carter de mécanisme (18, 20) au moyen de plusieurs bras ou pattes (28) fixés sur la bague et fixés par ailleurs à leur extrémité opposée sur le carter.

3. Transmission de véhicule suivant la revendication 1 ou 2, caractérisée en ce que le manchon (24) est engagé télescopiquement sur la bague (26) jusque dans une position de butée contre une bride (32) portée par la bague (26).

4. Transmission de véhicule suivant la revendication 1, 2 ou 3, caractérisée en ce que le manchon (24) comprend au moins une fente en L (38) réalisant un accouplement à baïonnette avec un élément (34) faisant saillie par rapport à la bague (26).

5. Transmission de véhicule suivant la revendication 4, caractérisée en ce que cet élément (34) est un boulon portant un écrou (40) destiné à être serré contre le manchon (24).

### Patentansprüche

1. Fahrzeuggetriebe mit Kardanwelle, bei dem die Kardanwelle (22), welche die Antriebskraft auf ein oder mehrere Räder überträgt, eine Universalverbindung außerhalb eines Getriebegehäuses (18, 20) an einem Ende der Welle, einen Schmiernippel an der Universalverbindung und eine Schutzhülse (24) aufweist, die auf dem Getriebegehäuse montiert ist und die Universalverbindung umgibt, dadurch gekennzeichnet, daß die Hülse (24) lösbar an einem Stützring (26) montiert ist, der an den Getriebegehäuse (18, 20) befestigt ist.

2. Fahrzeuggetriebe nach Anspruch 1, dadurch gekennzeichnet, daß der Stützring (26) an dem Getriebegehäuse (18, 20) mit Hilfe von mehreren Stützen (28) befestigt ist, die an dem Ring und mit ihren abgewandten Enden mit dem Gehäuse fest verbunden sind.

3. Fahrzeuggetriebe nach Anspruch 1 oder 2, dadurch gekennzeichnet, daß die Hülse (24) teleskopartig auf dem Ring (26) in Anlage mit einem Flansch (32) auf dem Ring (26) angeordnet ist.

4. Fahrzeuggetriebe nach Anspruch 1, 2 oder 3, dadurch gekennzeichnet, daß die Hülse (24) wenigstens einen L-förmigen Schlitz (38) aufweist, der eine Bajonettverbindung mit einem Glied (34) bildet, welches von dem Ring (26) vorspringt.

5. Fahrzeuggetriebe nach Anspruch 4, dadurch gekennzeichnet, daß das besagte Glied (34) ein Bolzen ist, der eine Mutter (40) zum Festziehen auf der Hülse (24) trägt.

FIG.1

FIG.2